# EUROPEAN PATENT SPECIFICATION

(11) **EP 3 450 242 B1**
(45) Date of publication and mention of the grant of the patent: **06.10.2021**
(21) Application number: 18190270.1
(22) Date of filing: 22.08.2018
(51) Int. Cl.: B60K 35/00, B60K 37/02, B60K 6/48, B60K 6/543, B60W 50/14

(54) **ASSIST DISPLAY DEVICE, SPEEDOMETER DEVICE, AND STRADDLED VEHICLE HAVING ASSIST DISPLAY DEVICE OR SPEEDOMETER DEVICE, AND ASSIST DISPLAY METHOD**
HILFSANZEIGEVORRICHTUNG, TACHOMETERVORRICHTUNG UND GRÄTSCHSITZFAHRZEUG MIT HILFSANZEIGEVORRICHTUNG ODER TACHOMETERVORRICHTUNG UND HILFSANZEIGEVERFAHREN
DISPOSITIF D'AFFICHAGE AUXILIAIRE, DISPOSITIF DE COMPTEUR DE VITESSE ET VÉHICULE À ENFOURCHER AYANT UN DISPOSITIF D'AFFICHAGE AUXILIAIRE OU UN DISPOSITIF DE COMPTEUR DE VITESSE ET PROCÉDÉ D'AFFICHAGE AUXILIAIRE

(30) Priority: 24.08.2017 JP 2017161501; 07.03.2018 JP 2018040656
(43) Date of publication of application: 06.03.2019
(73) Proprietor: Yamaha Hatsudoki Kabushiki Kaisha, Iwata-shi Shizuoka 438-8501 (JP)
(72) Inventor: AKIMOTO, Yusuke, Iwata-shi, Shizuoka 438-8501 (JP); YOSHIDA, Kazuhiro, Iwata-shi, Shizuoka 438-8501 (JP)
(74) Representative: Grünecker Patent- und Rechtsanwälte PartG mbB

(56) References cited:
- CN-A- 105 026 198
- JP-A- 2006 290 182
- JP-B2- 5 915 777

## Description

The present invention relates to an assist display device according to the preamble of independent claim 1, a speedometer device and a straddled vehicle having a speedometer device or an assist display device, and to an assist display method device according to the preamble of independent claim 10. Such an assist display device and assist display method can be taken from the prior art document CN 105 026 198 A.

Prior art document JP 5 915777 B2 relates to a display control device for a vehicle and a display control method for a vehicle which perform display control of control drive control information of a vehicle on a display device provided in a meter panel of an in-vehicle meter device. If the display control device determines that the driving support control performed by a driving support device has activated, a display controller displays the support state for informing the driver that said driving support control is activated, and continues displaying the image for displaying the support state while the driving support control is in operation. If it is determined that the driving support control has ended before a pre-set minimum display time has elapsed, then display control is continued until the minimum display time has elapsed. Hence, even when the operation state of a driving support control changes in a short period of time, this vehicle display control device displays information with better recognizability.

A vehicle using an engine as its power source typically includes a rotating electrical machine installed thereon that generates electric power using the rotation of the engine.

Japanese Laid-Open Patent Publication Nos. 2004-122925 and 2008-24255 each disclose a straddled vehicle that uses an electric power-generating rotating electrical machine as a starter motor for driving the crank shaft of the engine at the start of the engine and as an assisting motor for assisting the power of the engine as needed while running.

While the rotating electrical machine is operating as an assisting motor, it may be suitable for assisting the driving of a rider to visually indicate that the engine power is being assisted. In order to enhance such a driving assisting effect, an assist display section may be arranged in the vicinity of the speed display section (speedometer), wherein the assist display section indicates that the engine power is being assisted. With such an arrangement, the amount of eye movement from the speed display section to the assist display section can be small.

On the other hand, typically, there is a need for a rider to know the current running speed. In order to accommodate this need, it is preferred to ensure a large display area for the speed display section.

However, the larger the display area of the speed display section is ensured to be, the smaller the display area of the assist display section.

The speed display section is normally arranged in the space of the central portion between the left and right handle grips (to the right of the left grip and to the left of the right grip), and the assist display section may also be arranged in that space. However, with layout restrictions, it is difficult to ensure a sufficient area for that space. Particularly, with small-sized scooter-type straddled vehicles having relatively small displacements, the vehicles themselves are small in the first place, and there are even more space restrictions than large-sized straddled vehicles. There are more restrictions on the use of the space because there is a need to arrange switches and warning indicators in that space and there around.

As a result, the display area of the assist display section is likely to be small, and there has been more room for improvement in the driving assisting effect for a rider using the assist display section.

It is an object of the present invention to provide an assist display device, a speedometer device and a straddled vehicle having a speedometer device or an assist display device, and an assist display method that can enhance the driving assisting effect for a rider of a straddled vehicle by using an assist display section. According to the present invention said object is solved by an assist display device according to claim 1, a speedometer device according to claim 8 and a straddled vehicle having a speedometer device or an assist display device according to claim 9, and by an assist display method according to claim 10. Preferred embodiments are laid down in the further dependent claims.

A speedometer device according to an embodiment is a speedometer device for use in a straddled vehicle having an engine and a rotating electrical machine wherein a power of the engine is assisted by using a power of the rotating electrical machine, the speedometer device including: a speed display section configured to display a running speed of the straddled vehicle; an assist display section configured to give a notification that the engine is being assisted; and a control section configured to control the notification by the assist display section, wherein the control section causes the assist display section to: give the notification over a period of time in which the engine is being assisted; and even after an end of the assistance, continue to give the notification over a predetermined period of time after the end of the assistance.

Since the speedometer device continues to give an assist notification over a predetermined period of time even after the end of the assistance, it is possible to more clearly and more sufficiently notify the rider that the assist function has been actuated. Thus, it is possible to further enhance the effect of assisting the driving of the rider.

In one embodiment, an area of the assist display section is smaller than an area of the speed display section.

Since the area of the assist display section is smaller than the area of the speed display section, the visibility of the assist display section is normally lower than the visibility of the speed display section. However, even after the assistance is ended, the assist display section continues to give the notification over a predetermined period of time after the end of the assistance. Therefore, even if the area of the assist display section is relatively small, it is possible to more clearly and more sufficiently notify the rider that the assist function has been actuated. Thus, it is possible to further enhance the effect of assisting the driving of the rider.

The assistance is started when a predetermined assist-starting condition is satisfied; and when the engine is assisted, the control section receives an assist state signal at a first level and, in response to receiving the assist state signal at the first level, causes the assist display section to give the notification.

In one embodiment, the assistance is ended when a predetermined assist-ending condition is satisfied; and when the assistance is ended, the control section receives an assist state signal at a second level that is different from the first level and, in response to receiving the assist state signal at the second level, starts counting a predetermined period of time.

The control section starts counting the predetermined period of time in response to the assist state signal at the second level that is received when the assistance is ended. That is, the speedometer device continues to give the assist notification even after the end of the assistance. Therefore, it is possible to ensure that a notification is displayed on the assist display section after the end of the assistance.

In one embodiment, the straddled vehicle includes a lead battery; and the rotating electrical machine assists the power of the engine by rotating by using electric power stored in the lead battery.

Since a lead battery takes some time to be charged, there is a limit on how often the engine can be assisted. Under such a limitation, when the assist function is actuated, it is possible to more clearly give the notification to the rider.

In one embodiment, the assist display section includes a display device; and the assist display section notifies that the engine is being assisted by way of an image displayed on the display device. Since the notification that the engine is being assisted is given by displaying an image on the display device, it is possible to give more information visually to the rider.

In one embodiment, the assist display section is a liquid crystal display device using thin film transistors as switching elements.

In one embodiment, the assist display section includes a lamp; and the assist display section gives a notification that the engine is being assisted by means of the lamp being lit and/or blinking.

In one embodiment, the predetermined period of time is preferably 3 seconds or less, and more preferably 0.5 second or more and less than 2 seconds.

An assist display device according to an embodiment is an assist display device for use in a straddled vehicle having an engine and a rotating electrical machine wherein a power of the engine is assisted by using a power of the rotating electrical machine, the assist display device including: an assist display section configured to give a notification that the engine is being assisted; and a control section configured to control the notification by the assist display section, wherein the control section causes the assist display section to: give the notification over a period of time in which the engine is being assisted; and even after an end of the assistance, continue to give the notification over a predetermined period of time after the end of the assistance.

A straddled vehicle according to an embodiment includes: a frame including a head pipe; a steering device supported on the head pipe; a seat provided rearward of the steering device; a leg space provided between the steering device and the seat, and used by a rider to rest the rider's feet thereon; an engine; a rotating electrical machine configured to assist at least a power of the engine; and any one of the speedometer devices set forth above or any one of the assist display devices set forth above.

A speedometer device according to an embodiment is a speedometer device for use in a straddled vehicle having an engine and a rotating electrical machine wherein a power of the engine is assisted by using a power of the rotating electrical machine, the speedometer device including: a speed display section configured to display a running speed of the straddled vehicle; an assist display section configured to give a notification that the engine is being assisted; and a control section configured to control the notification by the assist display section. The control section causes the assist display section to: give the notification over a period of time in which the engine is being assisted; and even after an end of the assistance, continue to give the notification over a predetermined period of time after the end of the assistance. Therefore, it is possible to more clearly and more sufficiently notify the rider that the assist function has been actuated. Thus, it is possible to further enhance the effect of assisting the driving of the rider.

### BRIEF DESCRIPTION OF THE DRAWINGS

FIG. 1 is a schematic side view showing a general configuration of a scooter-type motorcycle.
FIG. 2 is an external perspective view showing the arrangement and configuration of a speedometer device 200 provided on a handle 4.
FIG. 3 is a schematic diagram illustrating a configuration of an engine unit EU.
FIG. 4 is a schematic diagram illustrating a configuration of the engine unit EU.
FIG. 5 is a block diagram showing a configuration of the control system of an engine system ES and a configuration of the speedometer device 200.
FIG. 6 is a diagram showing an example of an assist-starting condition represented by a logic circuit operation.
FIG. 7 is a diagram showing an example of an assist-ending condition represented by a logic circuit operation.
FIG. 8 shows an example of a standard notification image (A) and assist notification images (B) and (C) that are selectively displayed on an assist display section 230.
FIG. 9 is a timing diagram showing when an assist notification image is switched to a normal notification image.
FIG. 10 is a flow chart showing the procedure of the process of displaying the notification image on the assist display section 230.
FIG. 11 is a diagram showing how an image 62 of the assist notification image (B) fades out after the end of assistance ((A) to (C)).
FIG. 12 is a diagram showing how the brightness of the image 62 of the assist notification image (B) once increases and then fades out after the end of assistance ((A) to (E)).
FIG. 13 is a diagram showing a speedometer device 202 including a plurality of LEDs as the assist display section 230.
FIG. 14 is a side view showing a configuration of an underbone-type motorcycle 102.
FIG. 15 is a diagram showing an example in which a speed display section 220 and the assist display section 230 are provided separately on the handle 4.

### DETAILED DESCRIPTION

An assist display device according to a preferred embodiment, a speedometer device having the assist display device, and a straddled vehicle having the speedometer device will now be described. As used herein, a motorcycle will be described as an example of a straddled vehicle. In the following description, front, rear, left and right refer to these directions as seen from the driver of the motorcycle.

### (1) Motorcycle

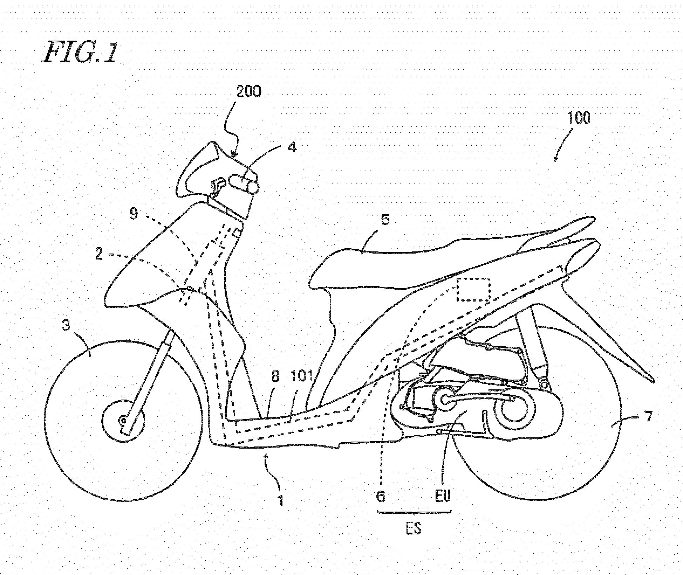

FIG. 1 is a schematic side view showing a general configuration of a scooter-type motorcycle according to a preferred embodiment.

A motorcycle 100 of the present embodiment includes a rotating electrical machine that functions as a starter/electric generator. The rotating electrical machine generates electric power using the rotation. The rotating electrical machine is used as a starter motor for driving the crank shaft of the engine at the start of the engine, and also as an assisting motor for assisting the power of the engine while running. The rotating electrical machine functioning as an assisting motor may be referred to simply as a "motor" herein.

The motorcycle 100 shown in FIG. 1 includes a frame 101 including a head pipe 9, a handle 4 (steering device) supported on the head pipe 9, a seat 5 provided rearward of the handle 4, and a leg space 8. The leg space 8 is provided between the handle 4 and the seat 5, and is used by the rider to rest his/her feet thereon.

With the motorcycle 100 of FIG. 1, a front fork 2 is provided in a front portion of a body 1 so that the front fork 2 can swivel left and right. The handle 4 is attached to the upper end of the front fork 2, and a front wheel 3 is rotatably attached to the lower end of the front fork 2.

The seat 5 is provided on an upper portion of generally the center of the body 1. An ECU (Engine Control Unit) 6 and an engine unit EU are provided under the seat 5. The ECU 6 and the engine unit EU together form the engine system ES. A rear wheel 7 is rotatably attached to a lower portion of the rear end of the body 1. The rear wheel 7 is driven by the power generated by the engine unit EU.

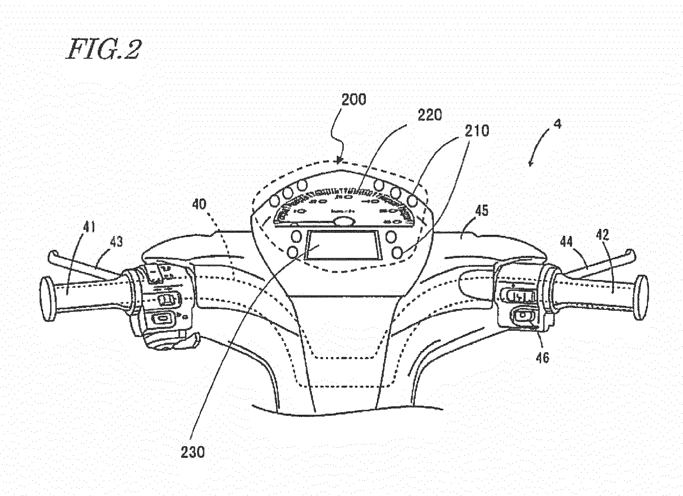

The motorcycle 100 includes a speedometer device 200. The details of the speedometer device 200 will now be described with reference to FIG. 2.

### (2) Speedometer device

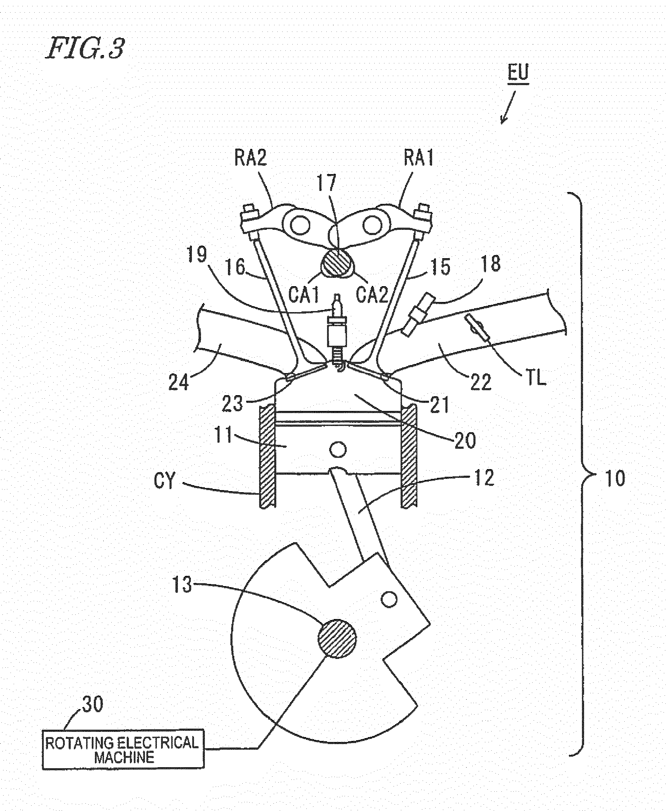

FIG. 2 is an external perspective view showing the arrangement and configuration of the speedometer device 200 provided on the handle 4. As shown in FIG. 2, the handle 4 includes a handle bar 40 that extends left and right. A fixed grip 41 is provided on a left end portion of the handle bar 40, and a throttle grip 42 is provided on a right end portion of the handle bar 40. The throttle grip 42 can be rotated within a predetermined angle range with respect to the handle bar 40. The opening of a throttle bulb TL (FIG. 3) to be described below is adjusted by operating the throttle grip 42.

The speedometer device 200 is provided around the center of the handle 4. That is, the speedometer device 200 is provided on the handle 4 about in the middle between the fixed grip 41 and the throttle grip 42. The speedometer device 200 is located in front of and below the rider on the vehicle.

The speedometer device 200 includes one or more warning indicators 210, a speed display section 220, and an assist display section 230.

The speed display section 220 displays the current running speed using a pointer.

In the present embodiment, the assist display section 230 is a liquid crystal display device (LCD) using thin film transistors (TFT) as switching elements.

The assist display section 230 displays an image (hereinafter referred to as a "standard notification image") including the time, the amount of fuel remaining, the instantaneous fuel economy, the odometer, etc., while the motorcycle 100 is not in motion or is running normally. On the other hand, the assist display section 230 displays an image (hereinafter referred to as an "assist notification image") that notifies the rider that the engine is being assisted by the rotating electrical machine while the rotating electrical machine is assisting the power of the engine, e.g., when the motorcycle 100 starts running. Examples of the standard notification image and the assist notification image will be described below. Note that the liquid crystal display device using TFTs is an example. A display device using an organic EL panel may be employed.

As will be understood from FIG. 2, the area taken up by the assist display section 230 is smaller than that of the speed display section 220. Therefore, it can be said that the visibility of the speed display section 220 is normally higher than that of the assist display section 230. Note however that the smaller the assist display section 230 is, the more it is possible to prevent an increase in the manufacturing cost of the speedometer device 200.

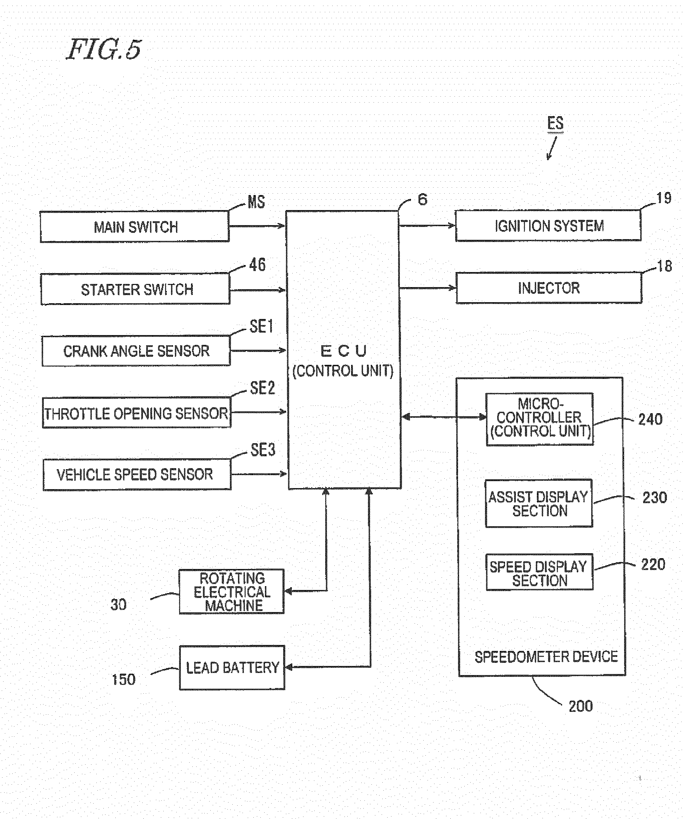

Another configuration of the handle 4 will now be described. A brake lever 43 for actuating the brake on the rear wheel 7 (FIG. 1) is provided forward of the fixed grip 41, and a brake lever 44 for actuating the brake on the front wheel 3 (FIG. 1) is provided forward of the throttle grip 42. The handle bar 40 is covered by a handle cover 45. A starter switch 46 is provided on the handle cover 45 next to the throttle grip 42. A main switch MS (FIG. 5 to be discussed below) is provided beneath the handle 4.

### (3) Configuration of engine unit

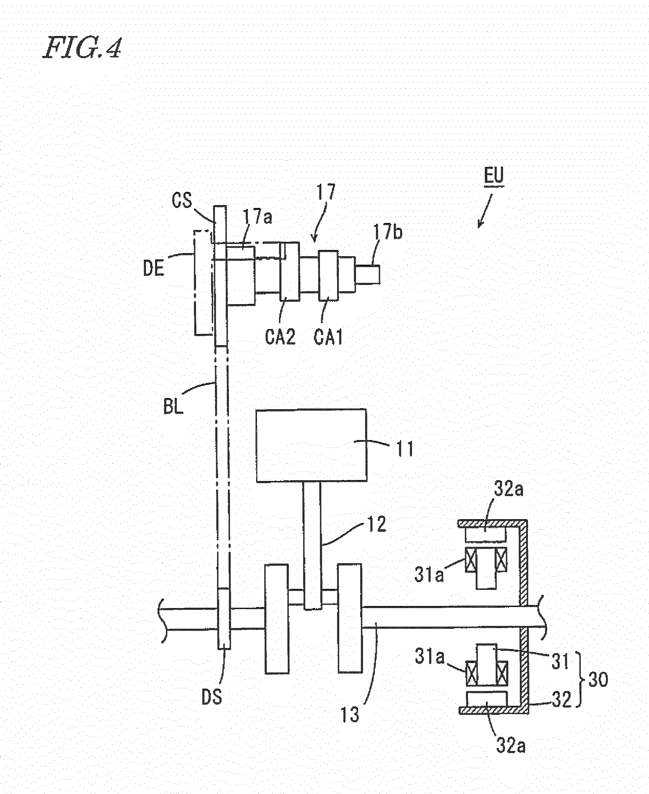

FIG. 3 and FIG. 4 are schematic diagrams illustrating a configuration of the engine unit EU. As shown in FIG. 3, the engine unit EU includes an engine 10 and a rotating electrical machine 30. The rotating electrical machine 30 functions as a starter/electric generator. The engine 10 includes a cylinder CY, a piston 11, a conrod (connecting rod) 12, a crank shaft 13, an intake valve 15, an exhaust valve 16, a cam shaft 17, an injector 18 and an ignition system 19. In the present embodiment, the engine 10 is a 4-stroke single-cylinder engine.

The piston 11 is provided so that it can reciprocate in the cylinder CY, and is connected to the crank shaft 13 via the conrod 12. The cylinder CY and the piston 11 together define a combustion chamber 20. The combustion chamber 20 communicates with an intake passageway 22 via an intake port 21, and communicates with an exhaust passageway 24 via an exhaust port 23. The intake valve 15 is provided so as to open/close the intake port 21, and the exhaust valve 16 is provided so as to open/close the exhaust port 23. The throttle bulb TL is provided along the intake passageway 22 for adjusting the flow rate of the air to be guided into the combustion chamber 20. As described above, the opening of the throttle bulb TL is adjusted by operating the throttle grip 42 of FIG. 2.

The injector 18 is configured to inject fuel into the intake passageway 22. The ignition system 19 is configured to ignite the fuel mixture in the combustion chamber 20. Fuel injected by the injector 18 is mixed with the air and guided into the combustion chamber 20, and the fuel mixture is ignited in the combustion chamber 20 by the ignition system 19. The fuel mixture burns to drive the piston 11, and the reciprocation of the piston 11 is converted into the rotation of a crank shaft 210. The torque of the crank shaft 13 is transmitted to the rear wheel 7 of FIG. 1, thereby driving the rear wheel 7.

The cam shaft 17 is provided so as to rotate together with the rotation of the crank shaft 13. Rocker arms RA1 and RA2 are provided in contact with the cam shaft 17 so that they can swivel. The cam shaft 17 drives the intake valve 15 via the rocker arm RA1, and the exhaust valve 16 via the rocker arm RA2.

As shown in FIG. 4, a cam sprocket CS is provided at one end of the cam shaft 17. A cam shaft drive sprocket DS is provided on the crank shaft 13. A belt BL is wound between the cam sprocket CS and the cam shaft drive sprocket DS. The torque of the crank shaft 13 is transmitted to the cam shaft 17 via the belt BL. The rotational speed of the cam shaft 17 is 1/2 the rotational speed of the crank shaft 13.

The cam shaft 17 has cam journals 17a and 17b, an intake cam CA1 and an exhaust cam CA2. The cam journal 17a is arranged so as to be next to the cam sprocket CS, and the cam journal 17b is arranged at the other end of the cam shaft 17. The cam journals 17a and 17b are each held by a bearing (not shown). The intake cam CA1 and the exhaust cam CA2 are provided between the cam journals 17a and 17b. The intake cam CA1 is provided so as to be next to the cam journal 17b, and the exhaust cam CA2 is provided so as to be next to the cam journal 17a. The intake cam CA1 drives the rocker arm RA1 of FIG. 3 when the crank angle (rotational position of the crank shaft 13) is within an angle range corresponding to the intake cycle. The exhaust cam CA2 drives the rocker arm RA2 of FIG. 3 when the crank angle is within an angle range corresponding to the exhaust cycle.

A compression release mechanism DE is provided on the cam shaft 17. The compression release mechanism DE lifts the exhaust valve 16, independently of the exhaust cam CA2, to lower the pressure in the cylinder CY. The compression release mechanism is known in the art, and will not be described below.

The rotating electrical machine 30 includes a stator 31 and a rotor 32. The stator 31 is secured on a crank case (not shown), and includes a plurality of stator coils 31a of U, V and W phases. The stator coils 31a are arranged along a circle that is centered about the rotational center of the crank shaft 13. The rotor 32 is secured on the crank shaft 13 so as to surround the stator 31. The rotor 32 includes a plurality of magnets 32a, and the magnets 32a are arranged along a circle that is centered about the rotational center of the crank shaft 13. The rotating electrical machine 30 is capable of driving the crank shaft 13 using the power supplied from a lead battery to be described below, and charging the lead battery using the power generated from the rotation of the crank shaft 13. A starter motor and a generator may be provided separately instead of the rotating electrical machine 30.

### (4) Internal configuration of engine unit and speedometer device

FIG. 5 is a block diagram showing a configuration of the control system of the engine system ES and a configuration of the speedometer device 200. The control system of the engine system ES and the speedometer device 200 operate using the power stored in a lead battery (lead storage battery) 150. The lead battery 150 has a property of discharging a large current within a short period of time, and is capable of outputting a large current at the start of an engine, for example, Moreover, the lead battery 150 is available at a relatively low price.

As shown in FIG. 5, the engine system ES includes a crank angle sensor SE1, a throttle opening sensor SE2 and a vehicle speed sensor SE3. The ECU 6 can detect various states of the motorcycle 100 by using the outputs from these sensors.

The crank angle sensor SE1 is a sensor for detecting the crank angle. By detecting the crank angle, it is possible to obtain the rotational speed (the number of revolutions per minute, rpm) of the engine 10. The throttle opening sensor SE2 detects the opening of the throttle bulb TL of FIG. 3 (hereinafter referred to as the throttle opening). The vehicle speed sensor SE3 detects the running speed (vehicle speed) of the motorcycle 100.

The vehicle speed sensor SE3 will be described in greater detail. Consider an example in which the vehicle speed sensor SE3 detects 30 pulses per one revolution of the front wheel 3. Assume that L denotes the circumferential length of the front wheel 3, and t denotes the period of time required for the vehicle speed sensor SE3 to detect 30 pulses. The vehicle speed sensor SE3 can obtain, as L/t, the travel speed (vehicle speed) V of the motorcycle 100. Note that the vehicle speed sensor SE3 may detect a pulse signal, and the ECU 6 performs the operation described above so as to obtain the vehicle speed.

The detection results of the crank angle sensor SE1, the throttle opening sensor SE2 and the vehicle speed sensor SE3 are each given to the ECU 6 as a detection signal. The operation of the main switch MS and the operation of the starter switch 46 are each given to the ECU 6 as an operation signal.

The ECU 6 includes a CPU (central processing unit) and a memory, for example. A microcontroller may be used instead of a CPU and a memory. The ECU 6 is a control section of the motorcycle 100. The ECU 6 controls the injector 18, the ignition system 19 and the rotating electrical machine 30 based on the detection signal and the operation signal given thereto.

For example, when the main switch MS is turned ON and the starter switch 46 is turned ON, the ECU 6 actuates the rotating electrical machine 30 to drive the crank shaft 13 of the engine 10. Thus, the engine 10 starts. The start of the engine 10 refers to the start of the burning of a fuel mixture when the fuel injection by the injector 18 and the ignition by the ignition system 19 start.

When the motorcycle 100 stops and the main switch MS is turned OFF, the engine 10 stops. The stopping of the engine 10 refers to the discontinuation of the burning of a fuel mixture following the discontinuation of at least one of the fuel injection by the injector 18 and the ignition by the ignition system 19.

### (4-1) Start of assistance by rotating electrical machine

After the engine 10 starts, when the rider operates the throttle grip 42 to increase the opening of the throttle bulb TL, more fuel is supplied to the engine 10. Thus, the motorcycle 100 starts running. At this point, when it is determined that the "assist-starting condition" is satisfied, the ECU 6 drives the rotating electrical machine 30 to assist the power of the engine 10 using the power of the rotating electrical machine 30. Then, the ECU 6 outputs an assist state signal that indicates that the engine 10 is being assisted by the rotating electrical machine 30 to a microcontroller 240 of the speedometer device 200. The "assist state signal" is a voltage signal, for example, and is held at a relatively high voltage level (high level) while the engine 10 is being assisted by the rotating electrical machine 30. The "relatively high voltage level" is a voltage higher than 0 V, for example.

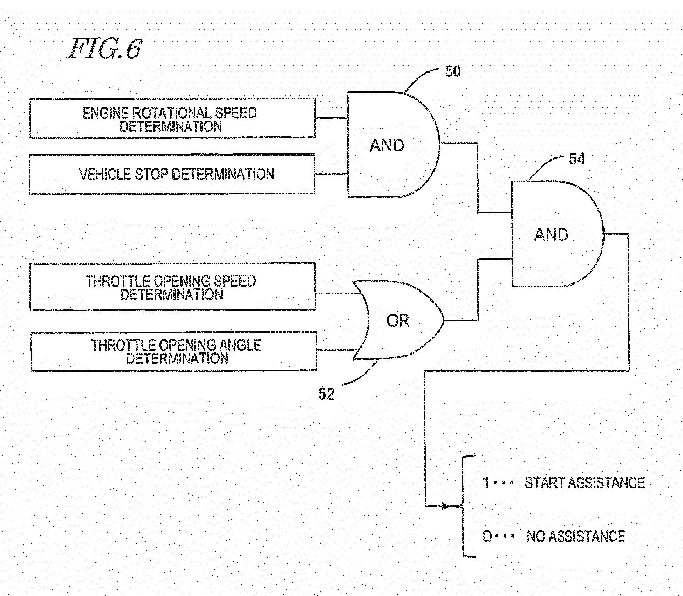

FIG. 6 shows an example of an assist-starting condition represented by a logic circuit operation. According to the non-limiting embodiment, four determinations are performed, i.e., "engine rotational speed determination", "vehicle stop determination", "throttle opening speed determination", and "throttle opening angle determination".

### Engine rotational speed determination

The ECU 6 performs a determination process regarding the rotational speed of the engine 10. Specifically, the ECU 6 determines whether or not the rotational speed of the engine 10 is less than or equal to a predetermined rotational speed. This is because there is more need for assistance when the rotational speed of the engine 10 is lower. For example, the ECU 6 inputs "1" when "the rotational speed of the engine 10 is 4000 rpm or less", or "0" otherwise, to the AND circuit 50.

### Vehicle stop determination

The ECU 6 performs a vehicle stop determination process for the motorcycle 100. Specifically, the ECU 6 determines whether or not the vehicle speed of the motorcycle 100 has become less than or equal to a predetermined speed. That is, the engine is assisted once for one stop of the vehicle. For example, the ECU 6 inputs "1" when "the vehicle speed is 1 km/h or less", or "0" otherwise, to the AND circuit 50.

### Throttle opening speed determination

The ECU 6 performs a determination process regarding the throttle opening speed. Specifically the ECU 6 determines whether or not the throttle opening speed (i.e., the rate of change in the throttle opening over one second) is greater than or equal to a predetermined throttle opening speed. This is for determining the rider's intention to accelerate. The engine is assisted once for one stop of the vehicle. For example, the ECU 6 inputs "1" when "the throttle opening speed is greater than or equal to 200 degrees per second", and "0" otherwise, to an OR circuit 52.

### Throttle opening angle determination

The ECU 6 performs a determination process regarding the throttle opening angle. Specifically, the ECU 6 determines whether or not the throttle opening angle (i.e., the amount of change in the throttle opening) is greater than or equal to a predetermined throttle opening angle. This is for determining the rider's intention to accelerate. For example, the ECU 6 inputs "1" when "the throttle opening angle is greater than or equal to 30 degrees", and "0" otherwise, to the OR circuit 52.

The output of the AND circuit 50 and the output of the OR circuit 52 are Input to an AND circuit 54. The ECU 6 starts assisting the engine 10 using the rotating electrical machine 30 when the output of the AND circuit 54 is "1", and does not start the assistance when it is "0".

When the ECU 6 operates based on a computer program, the ECU 6 determines whether or not to assist the engine 10 through the various determination processes in response to instructions from the computer program. According to the non-limiting embodiment, the ECU 6 causes the rotating electrical machine 30 to assist the power of the engine 10 when it is determined that the following condition is satisfied:
"the rotational speed of the engine 10 is less than or equal to a predetermined rotational speed (e.g., 4000 rpm)", "the vehicle speed is less than or equal to a predetermined speed (e.g., 1 km/h)", and "the throttle opening speed is greater than or equal to a predetermined throttle opening speed (e.g., 200 degrees per second) or the throttle opening angle is greater than or equal to a predetermined throttle opening angle (e.g., 30 degrees)".

It can be said that two of the conditions described above that relate to the throttle opening reflect the rider's intention to start the motorcycle 100. According to the non-limiting embodiment, the engine 10 is not assisted when any of these three quoted conditions is not satisfied.

### (4-2) End of assistance by rotating electrical machine

The assistance is continued until the "assist-ending condition" to be described next is satisfied. When it is determined that the "assist-ending condition" is satisfied, the ECU 6 stops the actuation of the rotating electrical machine 30 and ends the assistance using the rotating electrical machine 30. Then, the ECU 6 outputs an assist state signal that indicates that the engine 10 is not being assisted by the rotating electrical machine 30 to the microcontroller 240 of the speedometer device 200. The "assist state signal" is held at a relatively low voltage level (low level) in response to the end of the assistance by the rotating electrical machine 30. The "relatively low voltage level" is 0 V or less, for example.

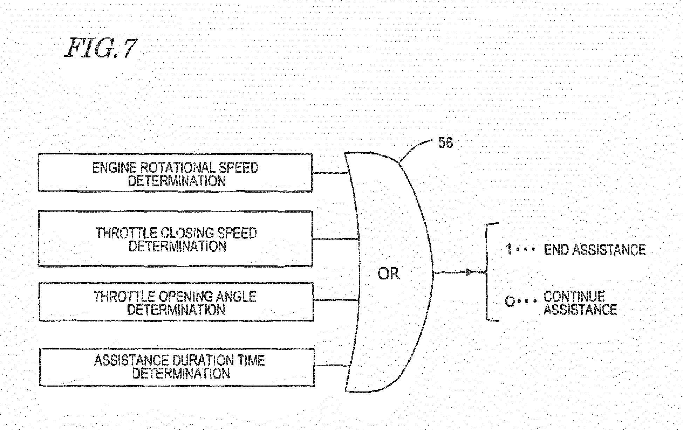

FIG. 7 shows an example of the assist-ending condition represented by a logic circuit operation. According to the non-limiting embodiment, four determinations are performed, i.e., "engine rotational speed determination", "throttle opening speed determination", "throttle opening angle determination", and "assistance duration time determination".

### Engine rotational speed determination

The ECU 6 performs a determination process regarding the rotational speed of the engine 10. Specifically, the ECU 6 determines whether or not the rotational speed of the engine 10 is less than or equal to a predetermined rotational speed. For example, the ECU 6 inputs "1" when "the rotational speed of the engine 10 is greater than 5500 revolutions per minute", and "0" otherwise, to the OR circuit 56.

### Throttle closing speed determination

The ECU 6 performs a determination process regarding the throttle closing speed. Specifically, the ECU 6 determines whether or not the throttle closing speed (i.e., the rate of change in the throttle opening in the negative direction over one second) is greater than a predetermined throttle closing speed. For example, the ECU 6 inputs "1" when "the throttle closing speed is greater than 200 degrees per second", and "0" otherwise, to the OR circuit 56.

### Throttle opening angle determination

The ECU 6 performs a determination process regarding the throttle opening angle. Specifically, the ECU 6 determines whether or not the throttle opening angle (i.e., the amount of change in the throttle opening) is less than or equal to a predetermined throttle opening angle. For example, the ECU 6 inputs "1" when "the throttle opening angle is 5 degrees or less", and "0" otherwise, to the OR circuit 56.

### Assistance duration time determination

The ECU 6 performs a determination process regarding the assistance duration time. Specifically, the ECU 6 determines whether or not the assistance duration time is greater than or equal to a predetermined period of time. For example, the ECU 6 inputs "1" when "the assistance duration time is longer than 3 seconds", and "0" otherwise, to the OR circuit 56. Note that the "assistance duration time" is the period of time that has elapsed since the start of the assistance.

The ECU 6 ends the assistance by the rotating electrical machine 30 when the output of the OR circuit 56 is "1", and continues the assistance when it is "0".

The ECU 6 determines whether to end or continue the assistance through these various determination processes in response to instructions from the computer program. According to the non-limiting embodiment, the ECU 6 ends assisting the power of the engine 10 using the rotating electrical machine 30 when at least one of the following conditions is satisfied:
- "the rotational speed of the engine 10 is greater than a predetermined rotational speed (e.g., 5500 revolutions per minute);
- "the throttle closing speed is greater than a predetermined throttle closing speed (e.g., 200 degrees per second);
- "the throttle opening angle is less than or equal to a predetermined throttle opening angle (e.g., 5 degrees); and
- "the assistance duration time is longer than 3 seconds".

The assistance is continued when none of these conditions is satisfied.

It can be said that those of these four conditions that relate to throttle closing/opening reflect the rider's intention to decelerate. The condition relating to the assistance duration time is provided in order to avoid assisting the engine 10 over a long time in view of the characteristic of the lead battery 150 that it takes some time to be charged.

Note that the logical operation using the AND circuit and the OR circuit is an example. The logical operation described above may be implemented by using a NAND circuit, or any other logic circuit, for example.

The particulars of the assist-starting condition and the assist-ending condition described above are exemplary, and do not limit the present teaching. Moreover, the association between the voltage of the "assist state signal" being high or low and whether or not the engine 10 is being assisted is exemplary, and is not essential. Appropriate design changes can be made by a person of ordinary skill in the art.

Next, the configuration of the speedometer device 200 will be described.

The speedometer device 200 further includes the microcontroller 240. The microcontroller 240 is a control section on the speedometer device 200 side. The microcontroller 240 communicates with the ECU 6 to receive signals that are needed for the operation of the speedometer device 200 from the ECU 6.

For example, the microcontroller 240 receives a vehicle speed V detection signal from the ECU 6, and moves the pointer of the speed display section 220 to a position representing the vehicle speed indicated by the received detection signal. Thus, the rider can know the current running speed.

The microcontroller 240 receives an assist state signal from the ECU 6, and changes the image displayed on the assist display section 230 depending on the presence/absence of the assistance by the rotating electrical machine 30. In the present embodiment, the microcontroller 240 switches the image displayed on the assist display section 230 between the "standard notification image" and the "assist notification image".

### (5) Process of switching image displayed on assist display section 230

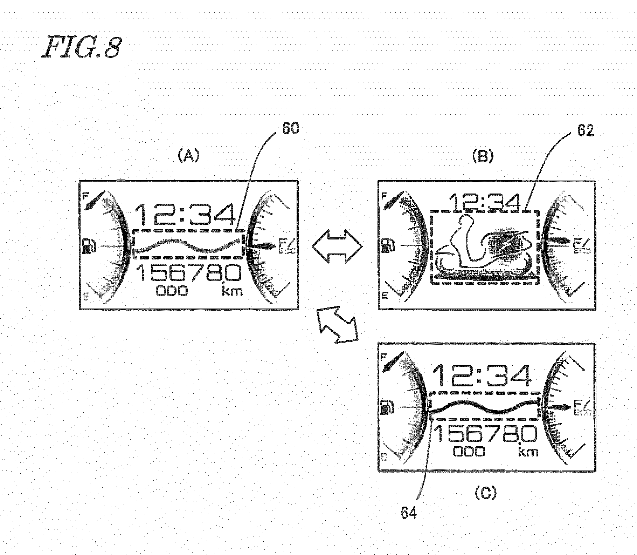

FIG. 8 shows an example of the standard notification image (A) and the assist notification images (B) and (C) to be selectively displayed on the assist display section 230. The microcontroller 240 determines whether to display the standard notification image (A) or the assist notification image (B) or (C) based on the voltage level of the assist state signal received from the ECU 6. Specifically, as a general rule, the microcontroller 240 displays the standard notification image (A) on the assist display section 230 when the voltage level of the assist state signal is low, and displays the assist notification image (B) or (C) when the voltage level of the assist state signal is high.

The standard notification image (A) includes the time, the amount of fuel remaining, the instantaneous fuel economy, the odometer, etc. The standard notification image (A) shows an image 60 of a wave shape in a region delimited by a rectangular broken line.

The assist notification image (B) shows an image 62 that indicates that the engine 10 is being assisted by the rotating electrical machine 30, as well as indicating the time, the amount of fuel remaining and the instantaneous fuel economy. The assist notification image (C) shows an image 64 that is an alternative example of the image 62. The image 64 of the assist notification image (C) is different in color from the image 60 of the assist notification image (A). Note that the assist notification image (B) does not need to include some or all of the time, the amount of fuel remaining and the instantaneous fuel economy, or may include other images.

By switching the display from the standard notification image (A) to the assist notification image (B) or (C), the rider can easily know that the power of the engine 10 is being assisted by the power of the rotating electrical machine 30. By visually indicating that the engine power is being assisted on a liquid crystal display device using TFTs, the rider can know that the straddled vehicle is running while conserving the fuel consumption, for example. Also, the rider can know that the vehicle is getting more driving force than normal when starting on an upward slope. Thus, giving a visual notification when the engine is being assisted contributes to assisting the rider driving the vehicle.

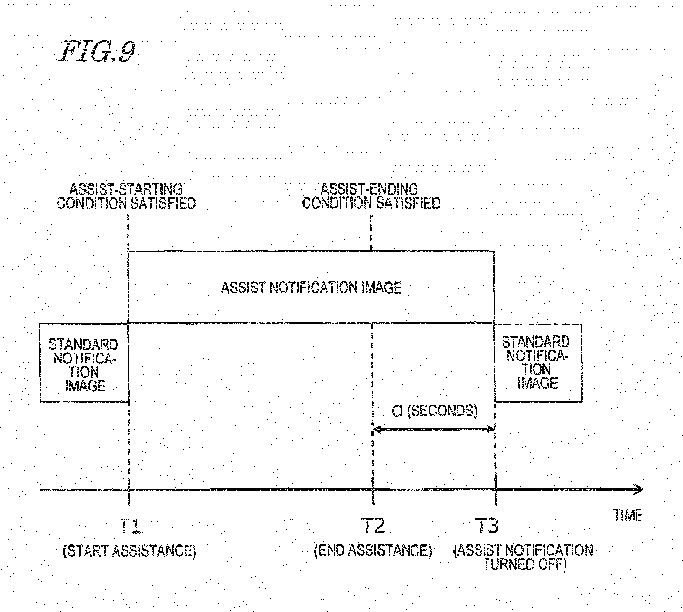

In the present embodiment, the microcontroller 240 controls the timing to switch between images displayed on the assist display section 230. More specifically, the microcontroller 240 switches from the assist notification image (B) or (C) displayed on the assist display section 230 to the normal notification image (A) after a predetermined period of time from the end of the assistance, as opposed to at the end of the assistance. This will now be described in detail with reference to FIG. 9. For the sake of discussion, the assist notification image (B) of FIG. 8 is used as the assist notification image.

FIG. 9 shows the timing to switch the assist notification image to the normal notification image. The horizontal axis of FIG. 9 represents time.

Until time T1, the motorcycle 100 is not moving, for example, and the standard notification image (A) is displayed on the assist display section 230.

Assume that the rotating electrical machine 30 starts assisting the power of the engine 10 at time T1. The ECU 6 sends the microcontroller 240 the assist state signal at a high level. In response to receiving the assist state signal, the microcontroller 240 switches the standard notification image (A) displayed on the assist display section 230 to the assist notification image (B). Thereafter, the assist notification image (B) is displayed on the assist display section 230.

Assume that the assistance ends at time T2. The ECU 6 sends the microcontroller 240 the assist state signal at a low level. In response to receiving the assist state signal, The microcontroller 240 does not immediately change the assist notification image (B), but continues to display the assist notification image (B). That is, the notification to the rider that the engine is being assisted is continued.

In response to receiving the assist state signal at a low level, the microcontroller 240 starts counting using the internal timer of the microcontroller 240. For example, the count of the internal timer is incremented in sync with the clock signal that is used for operating the speedometer device 200.

The microcontroller 240 determines whether or not the count of the internal timer has reached a predetermined value. The predetermined value corresponds to α (seconds), for example. At time T3, which is α seconds after time T2, the microcontroller 240 switches the assist notification image (B) displayed on the assist display section 230 to the standard notification image (A). After time T3, the microcontroller 240 displays the standard notification Image (A) on the assist display section 230 until the assistance is started again.

Preferably, the α (seconds) is 3 seconds. More preferably, α (seconds) is 0.5 second or more and less than 2 seconds. It has been considered that it was appropriate to set α to "a period of time that is shorter than such a length that the rider feels strange". Continuing to display the assist notification image (B) even after the end of the assistance by the rotating electrical machine 30 means that a state is displayed that is different from the actual state. If the assist notification image (B) is continued to be displayed without limit even after the rider no longer feels the enhancement by the assistance by the rotating electrical machine 30, the rider may possibly feel strange. Therefore, the display of the assist notification image (B) is continued only for a limited period of time that is shorter than such a length that the rider feels strange.

Note that "such a length that the rider feels strange" may vary from one rider to another, and may also vary depending on the level of the assistance by the rotating electrical machine 30. The α (seconds) can be determined taking all of those factors into consideration.

According to the present embodiment, even after the end of the assistance by the rotating electrical machine 30, the notification that the engine was being assisted (the assist notification image (B)) continues to be presented to the rider. Thus, it is possible to more clearly and more sufficiently notify the rider that the assist function has been actuated. Particularly, with a straddled vehicle, as compared with a four-wheeled vehicle, the engine speed (rpm) is likely to be high, and since the vehicle weight is low, the vehicle can easily accelerate.

When the area of the assist display section 230 is smaller than the area of the speed display section 220 as in the present embodiment, the visibility of the assist display section is normally lower than the visibility of the speed display section 220. However, even after the assistance is ended, the assist display section 230 continues to give the notification over a predetermined period of time after the end of the assistance. Therefore, even if the area of the assist display section 230 is relatively small, it is possible to more clearly and more sufficiently notify the rider that the assist function has been actuated. Thus, it is possible to further enhance the effect of assisting the driving of the rider.

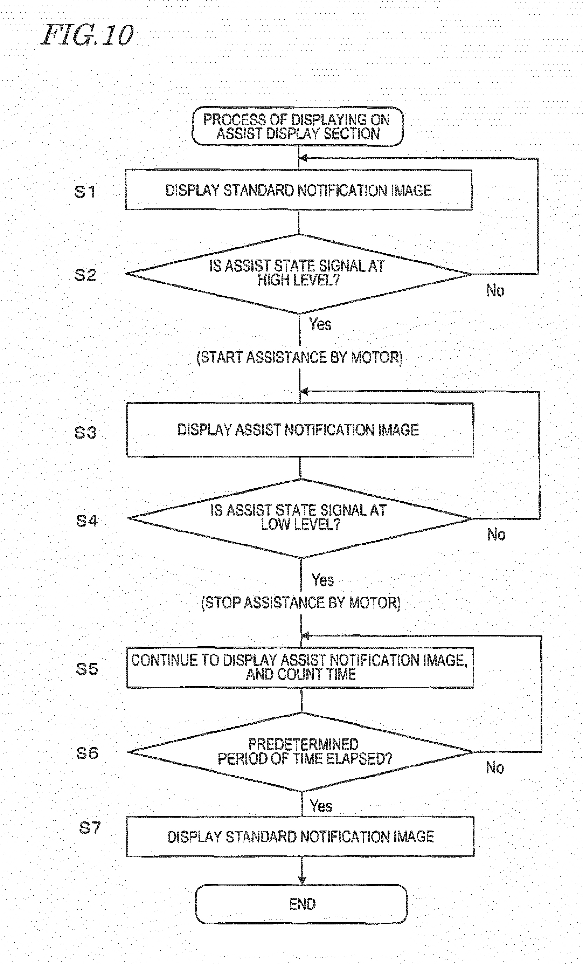

FIG. 10 is a flow chart showing the procedure of the process of displaying the notification image on the assist display section 230. The display process is performed by the microcontroller 240.

In step S1, the microcontroller 240 displays the standard notification image (A) on the assist display section 230. In step S2, the microcontroller 240 determines whether or not the assist state signal is at a high level, i.e., whether or not the assistance by the rotating electrical machine 30 has been started. Until the assist state signal transitions to a high level, the microcontroller 240 displays the standard notification image (A) on the assist display section 230. When the assist state signal transitions to a high level and the assistance by the rotating electrical machine 30 is started, the process proceeds to step S3.

In step S3, the microcontroller 240 switches from the standard notification image (A) to the assist notification image (B). Thereafter, in step S4, the microcontroller 240 determines whether or not the assist state signal is at a low level, i.e., whether or not the assistance by the rotating electrical machine 30 has been ended. Until the assist state signal transitions to a low level, the microcontroller 240 displays the assist notification image (B) on the assist display section 230. When the assist state signal transitions to a low level and the assistance by the rotating electrical machine 30 is ended, the process proceeds to step S5.

In step S5, even after the assist state signal transitions to a low level, the microcontroller 240 continues to display the assist notification image (B), and keeps time since when the assist state signal transitioned to a low level.

In step S6, the microcontroller 240 determines whether or not a predetermined period of time (α seconds) has elapsed. The process returns to step S5 until the predetermined period of time elapses. When the predetermined period of time elapses, the process proceeds to step S7.

In step S7, the microcontroller 240 displays the assist notification image (B) on the assist display section 230, replacing the standard notification image (A).

Through the process described above, it is possible to more clearly and more sufficiently notify the rider that the assist function has been actuated, and to further enhance the effect of assisting the driving of the rider.

The description above states that the assist notification image (B) continues to be displayed even after the rotating electrical machine 30 stops assisting the engine 10. To "continue", as used herein, means that the assist notification image (B) is displayed, rather than being switched to the standard notification image (A). There is no limitation on the manner in which the assist notification image (B) is displayed. For example, the display of the assist notification image (B) is not limited to a continuous display, but may be an intermittent display or may be a blinking display. Alternatively, the whole or part of the image may fade out.

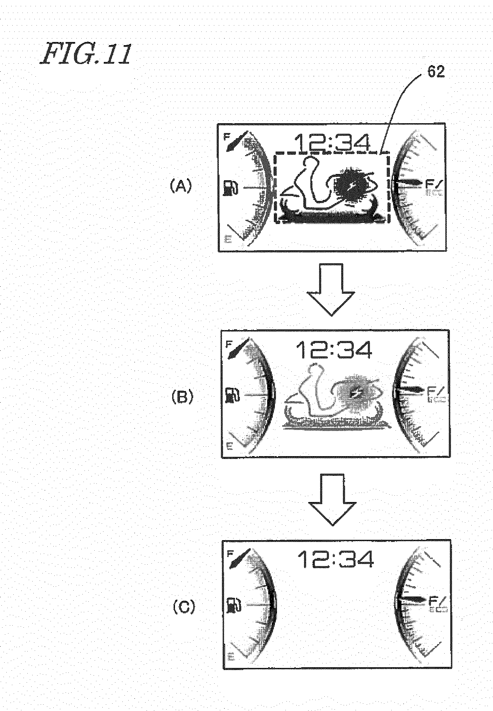

FIG. 11 shows how the image 62 of the assist notification image (B) fades out after the end of assistance ((A) to (C)). The fade-out is done over the period of time (from T2 to T3 in FIG. 9) in which the display of the assist notification image (B) is continued. When the assistance is ended, the image 62, which is a part of the assist notification image (B), gradually disappears, and the rider is therefore unlikely to feel strange about the display.

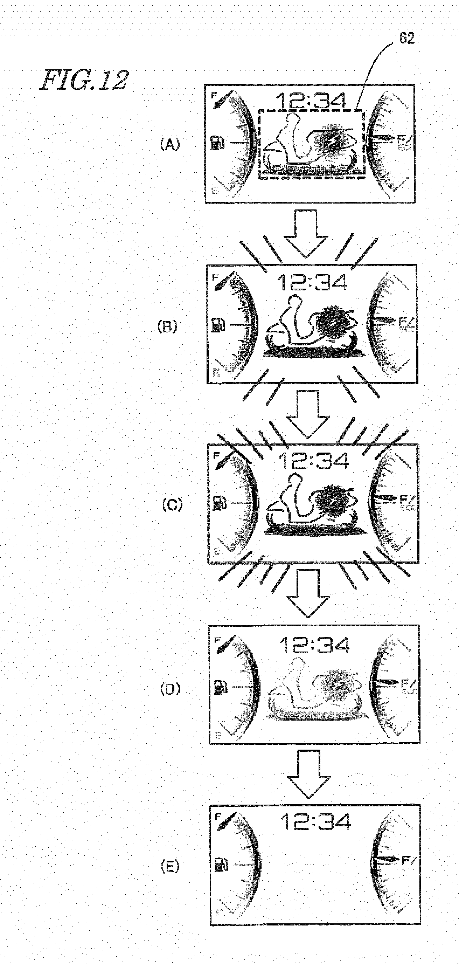

FIG. 12 shows how the brightness of the image 62 of the assist notification image (B) once increases and then fades out after the end of assistance ((A) to (E)). First, from (A) to (C) of FIG. 12, the brightness of the image 62 of the assist notification image (B) gradually increases. Thereafter, as shown in (D) and (E) of FIG. 12, the brightness of the Image 62 gradually decreases, and the image 62 fades out with colors paling gradually. With such a manner of display, the rider can visually recognize that the assistance has been ended. Then, the image 62, which is a part of the assist notification image (B), gradually disappears, and it is therefore possible to more reliably notify the rider that the engine was being assisted.

Note that with any of the examples set forth above, a sound may be output from a speaker (not shown) provided on the speedometer device 200, in addition to continuously displaying the assist notification image (B), in order to indicate that the engine was being assisted.

While the assist display section 230 is a liquid crystal display device (LCD) in the examples described above, it may be any other device such as a lamp for giving a notification. An example of the lamp is a light emitting diode (LED).

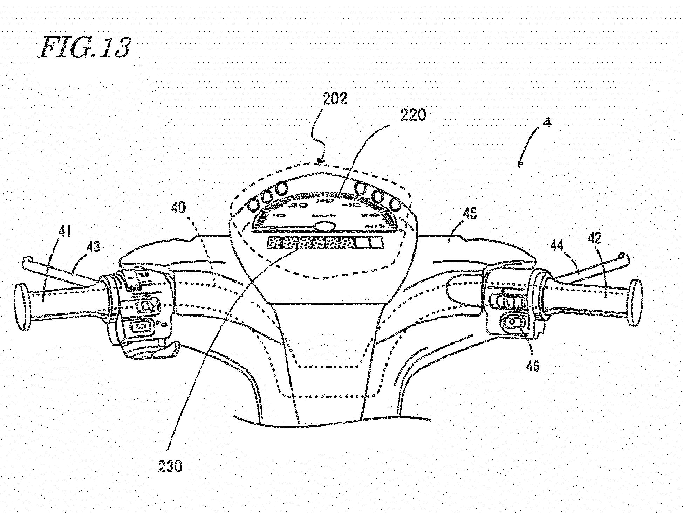

FIG. 13 shows the speedometer device 202 using a plurality of LEDs as the assist display section 230. The LEDs give a notification that the engine is being assisted by the rotating electrical machine 30 by being lit and/or blinking. The LEDs are turned ON and OFF by the microcontroller 240. In the illustrated example, the microcontroller 240 can turn ON a number of LEDs depending on the level of assistance being given by the rotating electrical machine 30.

Also in this example, the microcontroller 240 can continue to leave those LEDs, which have been turned ON during the period in which the engine was being assisted, ON over a predetermined period of time (α seconds) after the end of assistance, in order to notify the rider that the engine was being assisted. As in the example of FIG. 11, the LEDs may fade out over the predetermined period of time in which the LEDs are continuously left ON. As in the example of FIG. 12, the brightness of the LEDs may once increase and then fade out over the predetermined period of time in which the LEDs are continuously left ON.

While FIG. 1 shows a scooter-type motorcycle as an example of the straddled vehicle, the present teaching can also be employed for a so-called underbone-type motorcycle.

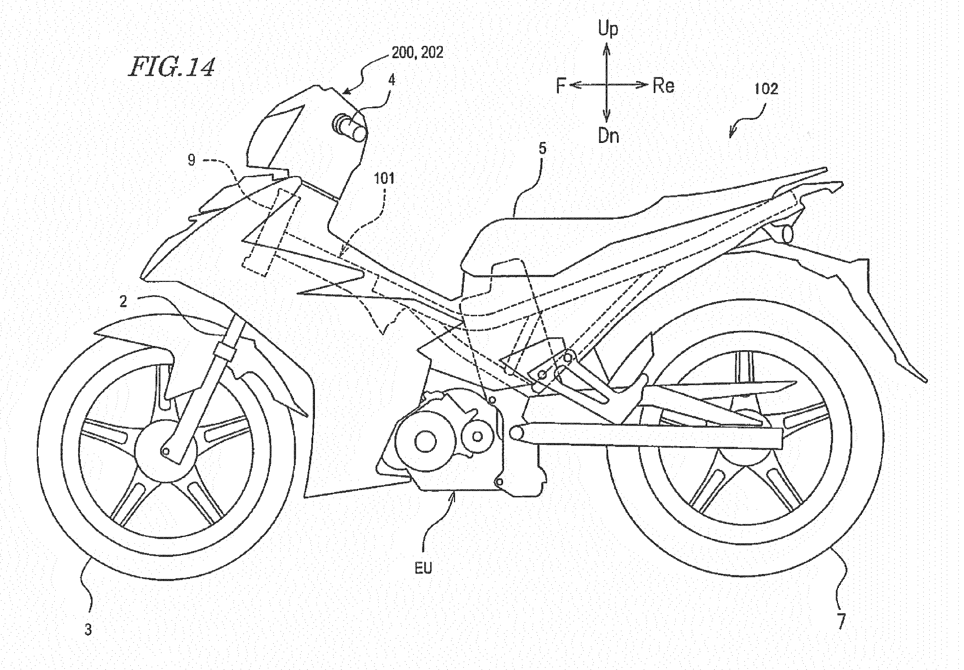

FIG. 14 is a side view showing a configuration of an underbone-type motorcycle 102.

The underbone-type motorcycle 102 includes the head pipe 9, the body frame 101 extending diagonally in a lower-rear direction from the head pipe 9, and the engine unit EU arranged under the body frame 101. With the underbone-type motorcycle 102, a space is formed in front of the seat 5, and the height of the section between the handle 4 and the seat 5 is low, but there is no leg space 8 such as that of the motorcycle 100 (FIG. 1). Also with the underbone-type motorcycle 102, a speedometer device 200 or 202 as described above may be provided on the handle 4.

Note that the speedometer device according to the present teaching can also be employed for a body-mount type motorcycle. With a body-mount type motorcycle, the speedometer device is attached to the body rather than to the handle. Therefore, when the handle is operated, it does not change the orientation of the speedometer device. Also with a body-mount type motorcycle, any of the speedometer devices described above can be employed. Then, It is possible to realize advantageous effects described above.

In the example described above, it is assumed that the speedometer device 200 includes the speed display section 220 and the assist display section 230. However, the advantageous effects of the present teaching can be realized as long as it is possible, using the assist display section 230, to notify the rider that the engine is being assisted and that the engine was being assisted. Therefore, the assist display section 230 may be provided by itself.

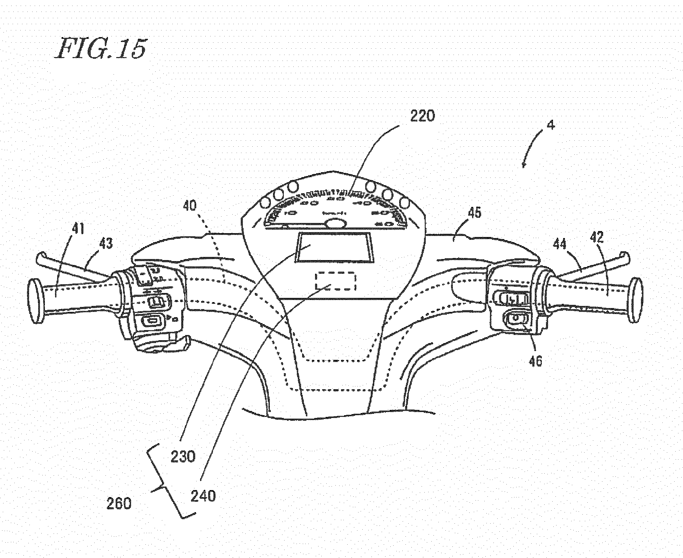

FIG. 15 is a diagram showing an example in which the speed display section 220 and the assist display section 230 are provided separately on the handle 4. The microcontroller 240 and the assist display section 230 together form an assist display device 260. The microcontroller 240 and the assist display section 230 perform processes as described above and operate as described above. The assist display device 260 can be manufactured and sold separately from the meter unit, which is the speed display section 220.

The speedometer device 200 or 202 according to the present teaching is a speedometer device for use in the straddled vehicle 100 or 102 having the engine 10 and the rotating electrical machine 30 wherein a power of the engine is assisted by using a power of the rotating electrical machine, the speedometer device including: the speed display section 220 configured to display a running speed of the straddled vehicle; the assist display section 230 configured to give a notification that the engine is being assisted; and the control section 240 configured to control the notification by the assist display section, wherein the control section causes the assist display section to: give the notification over a period of time in which the engine is being assisted; and even after an end of the assistance, continue to give the notification over a predetermined period of time after the end of the assistance.

Since the speedometer device continues to give an assist notification over a predetermined period of time even after the end of the assistance, it is possible to more clearly and more sufficiently notify the rider that the assist function has been actuated. Thus, it is possible to further enhance the effect of assisting the driving of the rider.

In one embodiment, an area of the assist display section 230 is smaller than an area of the speed display section.

Since the area of the assist display section is smaller than the area of the speed display section, the visibility of the assist display section is normally lower than the visibility of the speed display section. However, even after the assistance is ended, the assist display section continues to give the notification over a predetermined period of time after the end of the assistance. Therefore, even if the area of the assist display section is relatively small, it is possible to more clearly and more sufficiently notify the rider that the assist function has been actuated. Thus, it is possible to further enhance the effect of assisting the driving of the rider.

The assistance is started when a predetermined assist-starting condition is satisfied; and when the engine is assisted, the control section 240 receives an assist state signal at a first level and, in response to receiving the assist state signal at the first level, causes the assist display section to give the notification.

In one embodiment, the assistance is ended when a predetermined assist-ending condition is satisfied; and when the assistance is ended, the control section 240 receives an assist state signal at a second level that is different from the first level and, in response to receiving the assist state signal at the second level, starts counting a predetermined period of time.

The control section starts counting the predetermined period of time in response to the assist state signal at the second level that is received when the assistance is ended. That is, the speedometer device continues to give the assist notification even after the end of the assistance. Therefore, it is possible to ensure that a notification is displayed on the assist display section after the end of the assistance.

In one embodiment, the straddled vehicle includes the lead battery 150; and the rotating electrical machine assists the power of the engine by rotating by using electric power stored in the lead battery.

Since a lead battery takes some time to be charged, there is a limit on how often the engine can be assisted. Under such a limitation, when the assist function is actuated, it is possible to more clearly give the notification to the rider.

In one embodiment, the assist display section includes a display device; and the assist display section notifies that the engine is being assisted by way of an image displayed on the display device. Since the notification that the engine is being assisted is given by displaying an image on the display device, it is possible to give more information visually to the rider.

In one embodiment, the assist display section is a liquid crystal display device using thin film transistors as switching elements.

In one embodiment, the assist display section includes a lamp; and the assist display section gives a notification that the engine is being assisted by means of the lamp being lit and/or blinking.

In one embodiment, the predetermined period of time is preferably 3 seconds or less, and more preferably 0.5 second or more and less than 2 seconds.

The assist display device 260 according to an embodiment is an assist display device for use in a straddled vehicle having the engine 10 and the rotating electrical machine 30 wherein a power of the engine is assisted by using a power of the rotating electrical machine, the assist display device including: the assist display section 230 configured to give a notification that the engine is being assisted; and a control section 240 configured to control the notification by the assist display section, wherein the control section causes the assist display section to: give the notification over a period of time in which the engine is being assisted; and even after an end of the assistance, continue to give the notification over a predetermined period of time after the end of the assistance.

The straddled vehicle 100 or 102 according to an embodiment includes: the frame 101 including the head pipe 9; the steering device 4 supported on the head pipe; the seat 5 provided rearward of the steering device; the leg space 8 provided between the steering device and the seat, and used by a rider to rest the rider's feet thereon; the engine 10; the rotating electrical machine 30 configured to assist at least a power of the engine; and any one of the speedometer devices 200 and 202 set forth above or any one of the assist display devices 260 set forth above.

The present teaching is useful for a straddled vehicle in which the power of the engine is assisted by using the power of the rotating electrical machine.

## Claims

1. An assist display device for use in a straddled vehicle (100,102) having an engine (10) and a rotating electrical machine (30) wherein a power of the engine (10) is assisted by using a power of the rotating electrical machine (30), the assist display device (260) comprising:
an assist display section (230) configured to give a notification that the engine (10) is being assisted; and
a control section (240) configured to control the notification by the assist display section (230), wherein the control section (240) is configured to cause the assist display section (230) to give the notification over a period of time in which the engine (10) is being assisted, **characterized in that** the control section (240) is configured to cause the assist display section (230) to, even after an end of the assistance, continue to give the notification over a predetermined period of time after the end of the assistance.

2. An assist display device according to claim 1, **characterized in that** the control section (240) is configured to receive an assist state signal at a first level when the engine (10) is assisted, and configured to cause the assist display section (230) to give the notification in response to receiving the assist state signal at the first level, wherein the assistance is started when a predetermined assist-starting condition is satisfied.

3. An assist display device according to claim 2, **characterized in that** the control section (240) is configured to receive an assist state signal at a second level that is different from the first level when the assistance is ended, and is configured to start counting a predetermined period of time in response to receiving the assist state signal at the second level, wherein the assistance is ended when a predetermined assist-ending condition is satisfied.

4. An assist display device according to any one of claims 1 to 3, **characterized in that** the straddled vehicle (100,102) includes a lead battery (150); and
the rotating electrical machine (30) is configured to assist the power of the engine (10) by rotating by using electric power stored in the lead battery (150).

5. An assist display device according to any one of claims 1 to 4, **characterized in that** the assist display section (230) includes a display device (260); and
the assist display section (230) is configured to notify that the engine (10) is being assisted by way of an image displayed on the display device (260), preferably the assist display section (230) is a liquid crystal display device (260) using thin film transistors as switching elements.

6. An assist display device according to claim 1, **characterized in that** the assist display section (230) includes a lamp; and
the assist display section (230) is configured to give a notification that the engine (10) is being assisted by means of the lamp being lit and/or blinking.

7. An assist display device according to any one of claims 1 to 6, **characterized in that** the predetermined period of time is 3 seconds or less, preferably the predetermined period of time is 0,5 second or more and less than 2 seconds.

8. A speedometer device for use in a straddled vehicle (100,102) having an engine (10) and a rotating electrical machine (30) wherein a power of the engine (10) is assisted by using a power of the rotating electrical machine (30), the speedometer device comprising a speed display section (220) configured to display a running speed of the straddled vehicle (100,102) and an assist display device according to any one of claims 1 to 7, wherein an area of the assist display section (230) is smaller than an area of the speed display section (220).

9. A straddled vehicle (100,102) comprising:
a frame (101) including a head pipe (9);
a steering device (4) supported on the head pipe (9);
a seat (5) provided rearward of the steering device (4);
a leg space (8) provided between the steering device (4) and the seat (5), and used by a rider to rest the rider's feet thereon;
an engine (10);
a rotating electrical machine (30) configured to assist at least a power of the engine (10); and
an assist display device (260) according to any one of claims 1 to 7 or a speedometer device according to claim 8.

10. An assist display method for use in a straddled vehicle (100,102) having an engine (10) and a rotating electrical machine (30) wherein a power of the engine (10) is assisted by using a power of the rotating electrical machine (30), the assist display method comprising:
giving a notification that the engine (10) is being assisted; and
controlling the notification by an assist display section (230),
causing the assist display section (230) to give the notification over a period of time in which the engine (10) is being assisted, **characterized by**
causing the assist display section (230) to, even after an end of the assistance, continue to give the notification over a predetermined period of time after the end of the assistance.

11. An assist display method according to claim 10, **characterized in that** the assistance is started when a predetermined assist-starting condition is satisfied; and
when the engine is assisted, receiving an assist state signal at a first level and, in response to receiving the assist state signal at the first level, causes the assist display section (230) to give the notification.

12. An assist display method according to claim 11, **characterized in that** the assistance is ended when a predetermined assist-ending condition is satisfied; and
when the assistance is ended, receiving an assist state signal at a second level that is different from the first level and, in response to receiving the assist state signal at the second level, starts counting a predetermined period of time.

13. An assist display method according to any one of claims 10 to 12, **characterized in that** the predetermined period of time is 3 seconds or less.

14. An assist display method according to claim 13, **characterized in that** the predetermined period of time is 0.5 second or more and less than 2 seconds.

## Patentansprüche

1. Eine Unterstützung-Anzeige-Vorrichtung zur Verwendung in einem Spreiz-Sitz-Fahrzeug (100, 102), das einen Motor (10) und einer Dreh-Elektro-Maschine (30) hat, wobei eine Leistung des Motors (10) durch Verwendung einer Leistung der Dreh-Elektro-Maschine (30) unterstützt ist, die Unterstützung-Anzeige-Vorrichtung (260) umfasst:
einen Unterstützung-Anzeige-Abschnitt (230), der konfiguriert ist, um eine Meldung auszugeben, dass der Motor (10) unterstützt wird; und
einen Steuer-Abschnitt (240), der konfiguriert ist, um die Benachrichtigung durch den Unterstützung-Anzeige-Abschnitt (230) zu steuern, wobei der Steuer-Abschnitt (240) konfiguriert ist, um den Unterstützung-Anzeige-Abschnitt (230) zu veranlassen, die Benachrichtigung über eine Zeitspanne zu geben, in welcher der Motor (10) unterstützt wird, **dadurch gekennzeichnet, dass** der Steuer-Abschnitt (240) so konfiguriert ist, um den Unterstützung-Anzeige-Abschnitt (230) zu veranlassen, auch nach einem Ende der Unterstützung die Benachrichtigung über eine vorbestimmte Zeitspanne nach dem Ende der Unterstützung weiter zu geben.

2. Eine Unterstützung-Anzeige-Vorrichtung gemäß Anspruch 1, **dadurch gekennzeichnet, dass** der Steuer-Abschnitt (240) konfiguriert ist, um ein Unterstützung-Zustands-Signal auf einen ersten Pegel zu empfangen, wenn der Motor (10) unterstützt wird, und konfiguriert ist, um den Unterstützung-Anzeige-Abschnitt (230) zu veranlassen, die Benachrichtigung in Reaktion auf den Empfang des Unterstützung-Zustands-Signals auf dem ersten Pegel zu geben, wobei die Unterstützung gestartet wird, wenn eine vorbestimmte Unterstützung-Start-Bedingung erfüllt ist.

3. Eine Unterstützung-Anzeige-Vorrichtung gemäß Anspruch 2, **dadurch gekennzeichnet, dass** der Steuer-Abschnitt (240) konfiguriert ist, um ein Unterstützung-Zustands-Signal auf einen zweiten Pegel zu empfangen, der sich von dem ersten Pegel unterscheidet, wenn die Unterstützung beendet wird, und konfiguriert ist, um mit dem Zählen einer vorbestimmten Zeitdauer zu beginnen, als Reaktion auf den Empfang des Unterstützung-Zustands-Signals auf dem zweiten Pegel, wobei die Unterstützung beendet wird, wenn eine vorbestimmte Unterstützung-Ende-Bedingung erfüllt ist.

4. Eine Unterstützung-Anzeige-Vorrichtung gemäß irgendeinem der Ansprüche 1 bis 3, **dadurch gekennzeichnet, dass** das Spreiz-Sitz-Fahrzeug (100, 102) eine Blei-Batterie (150) aufweist; und
die Dreh-Elektro-Maschine (30) konfiguriert ist, um die Leistung des Motors (10) durch Rotation zu unterstützen, durch Verwenden von elektrischer Energie, die die in der Blei-Batterie (150) gespeichert ist.

5. Eine Unterstützung-Anzeige-Vorrichtung gemäß irgendeinem der Ansprüche 1 bis 4, **dadurch gekennzeichnet, dass** der Unterstützung-Anzeige-Abschnitt (230) eine Anzeige-Vorrichtung (260) enthält; und
der Unterstützung-Anzeige-Abschnitt (230) konfiguriert ist, um anzuzeigen, dass der Motor (10) unterstützt wird, durch Verwendung einer Abbildung, die auf der Anzeige-Vorrichtung (260) angezeigt ist, vorzugsweise ist wobei der Unterstützung-Anzeige-Abschnitt (230) eine Flüssigkristall-Anzeige-Vorrichtung (260), die Dünn-Schicht-Transistoren als Schalt-Elemente verwendet.

6. Eine Unterstützung-Anzeige-Vorrichtung gemäß Anspruch 1, **dadurch gekennzeichnet, dass** der Unterstützung-Anzeige-Abschnitt (230) eine Lampe enthält; und
der Unterstützung-Anzeige-Abschnitt (230) konfiguriert ist, um eine Benachrichtigung zu geben, dass der Motor (10) unterstützt wird, durch Aufleuchten und/oder Blinken der Lampe.

7. Eine Unterstützung-Anzeige-Vorrichtung gemäß irgendeinem der Ansprüche 1 bis 6, **dadurch gekennzeichnet, dass** die vorbestimmte Zeitspanne 3 Sekunden oder weniger beträgt, vorzugsweise beträgt die vorbestimmte Zeitspanne 0,5 Sekunden oder mehr und weniger als 2 Sekunden.

8. Eine Geschwindigkeits-Mess-Vorrichtung zur Verwendung in einem Spreiz-Sitz-Fahrzeug (100, 102), das einen Motor (10) und eine Dreh-Elektro-Maschine (30) hat, wobei eine Leistung des Motors (10) durch Verwendung einer Leistung der Dreh-Elektro-Maschine (30) unterstützt wird, die Geschwindigkeits-Mess-Vorrichtung einen Geschwindigkeits-Anzeige-Abschnitt (220), der konfiguriert ist, eine FahrGeschwindigkeit des Spreiz-Sitz-Fahrzeugs (100, 102) anzuzeigen, und eine Unterstützung-Anzeige-Vorrichtung gemäß irgendeinem der Ansprüche 1 bis 7 umfasst, wobei eine Fläche des Unterstützung-Anzeige-Abschnitts (230) kleiner als eine Fläche des Geschwindigkeits-Anzeige-Abschnitts (220) ist.

9. Ein Spreiz-Sitz-Fahrzeug (100, 102), das umfasst:
einem Rahmen (101), der ein Kopf-Rohr (9) beinhaltet;
eine Lenk-Vorrichtung (4), die sich auf dem Kopf-Rohr (9) abstützt;
einem Sitz (5), der hinter der Lenk-Vorrichtung (4) vorgesehen ist;
einen Bein-Raum (8), der zwischen der Lenk-Vorrichtung (4) und dem Sitz (5) vorgesehen ist und von einem Fahrer benutzt wird, um die Füße des Fahrers darauf abzulegen;
einem Motor (10);
eine Dreh-Elektro-Maschine (30), die konfiguriert ist, um zumindest eine Leistung des Motors (10) unterstützt; und
eine Unterstützung-Anzeige-Vorrichtung (260) gemäß irgendeinem der Ansprüche 1 bis 7 oder eine Geschwindigkeits-Mess-Vorrichtung gemäß Anspruch 8.

10. Ein Unterstützung-Anzeige-Verfahren zur Verwendung in einem Spreiz-Sitz-Fahrzeug (100, 102), das einen Motor (10) und einer Dreh-Elektro-Maschine (30) hat, wobei eine Leistung des Motors (10) durch Verwendung einer Leistung der Dreh-Elektro-Maschine (30) unterstützt ist, das Unterstützung-Anzeige-Verfahren umfasst:
Angeben einer Meldung, dass der Motor (10) unterstützt wird; und
Steuern der Benachrichtigung durch eine Unterstützung-Anzeige-Abschnitt (230), Veranlassen des Unterstützung-Anzeige-Abschnitt (230), die Benachrichtigung über eine Zeitspanne zu geben, in welcher der Motor (10) unterstützt wird, **gekennzeichnet durch**
Veranlassen des Unterstützung-Anzeige-Abschnitt (230), auch nach einem Ende der Unterstützung die Benachrichtigung über eine vorbestimmte Zeitspanne nach dem Ende der Unterstützung weiter zu geben.

11. Ein Unterstützung-Anzeige-Verfahren gemäß Anspruch 10, **dadurch gekennzeichnet, dass** die Unterstützung gestartet wird, wenn eine vorbestimmte Unterstützung-Start-Bedingung erfüllt ist; und
wenn der Motor unterstützt wird, ein Unterstützung-Zustands-Signal auf einem ersten Pegel empfangen wird, und als Reaktion auf den Empfang des Unterstützung-Zustands-Signals auf dem ersten Pegel den Unterstützung-Anzeige-Abschnitt (230) veranlasst, die Meldung zu geben.

12. Ein Unterstützung-Anzeige-Verfahren gemäß Anspruch 11, **dadurch gekennzeichnet, dass** die Unterstützung beendet wird, wenn eine vorbestimmte Unterstützung-Ende-Bedingung erfüllt ist; und
wenn die Unterstützung beendet ist, ein Unterstützung-Zustands-Signal auf einem zweiten Pegel empfangen wird, der sich vom ersten Pegel unterscheidet, und als Reaktion auf den Empfang des Unterstützung-Zustands-Signals auf dem zweiten Pegel das Zählen einer vorbestimmten Zeitspanne zu starten.

13. Ein Unterstützung-Anzeige-Verfahren gemäß irgendeinem der Ansprüche 10 bis 12, **dadurch gekennzeichnet, dass** die vorgegebene Zeitspanne 3 Sekunden oder weniger beträgt.

14. Ein Unterstützung-Anzeige-Verfahren gemäß Anspruch 13, **dadurch gekennzeichnet, dass** die vorgegebene Zeitspanne 0,5 Sekunden oder mehr und weniger als 2 Sekunden beträgt.

## Revendications

1. Dispositif d'affichage d'assistance destiné à être utilisé dans un véhicule à enfourcher (100, 102) ayant un moteur (10) et une machine électrique rotative (30) dans lequel une puissance du moteur (10) est assistée en utilisant une puissance de la machine électrique rotative (30), le dispositif d'affichage d'assistance (260) comprenant :
une section d'affichage d'assistance (230) configurée pour établir une notification que le moteur (10) est assisté ; et
une section de commande (240) configurée pour commander la notification par la section d'affichage d'assistance (230), dans lequel la section de commande (240) est configurée pour amener la section d'affichage d'assistance (230) à établir la notification sur une période de temps au cours de laquelle le moteur (10) est assisté, **caractérisé en ce que** la section de commande (240) est configurée pour amener la section d'affichage d'assistance (230) à, même après une fin de l'assistance, continuer à établir la notification sur une période de temps prédéterminée après la fin de l'assistance.

2. Dispositif d'affichage d'assistance selon la revendication 1, **caractérisé en ce que** la section de commande (240) est configurée pour recevoir un signal d'état d'assistance à un premier niveau lorsque le moteur (10) est assisté, et configurée pour amener la section d'affichage d'assistance (230) à établir la notification en réponse à la réception du signal d'état d'assistance au premier niveau, dans lequel l'assistance est démarrée lorsqu'une condition de démarrage d'assistance prédéterminée est satisfaite.

3. Dispositif d'affichage d'assistance selon la revendication 2, **caractérisé en ce que** la section de commande (240) est configurée pour recevoir un signal d'état d'assistance à un second niveau qui est différent du premier niveau lorsque l'assistance est terminée, et est configurée pour démarrer un décompte d'une période de temps prédéterminée en réponse à la réception du signal d'état d'assistance au second niveau, dans lequel l'assistance est terminée lorsqu'une condition de fin d'assistance prédéterminée est satisfaite.

4. Dispositif d'affichage d'assistance selon l'une quelconque des revendications 1 à 3, **caractérisé en ce que** le véhicule à enfourcher (100,102) comprend une batterie au plomb (150) ; et
la machine électrique rotative (30) est configurée pour assister la puissance du moteur (10) en tournant en utilisant de la puissance électrique stockée dans la batterie au plomb (150).

5. Dispositif d'affichage d'assistance selon l'une quelconque des revendications 1 à 4, **caractérisé en ce que** la section d'affichage d'assistance (230) comprend un dispositif d'affichage (260) ; et
la section d'affichage d'assistance (230) est configurée pour notifier que le moteur (10) est assisté au moyen d'une image affichée sur le dispositif d'affichage (260), de préférence la section d'affichage d'assistance (230) est un dispositif d'affichage à cristaux liquides (260) utilisant des transistors à couche mince comme éléments de commutation.

6. Dispositif d'affichage d'assistance selon la revendication 1, **caractérisé en ce que** la section d'affichage d'assistance (230) comprend une lampe ; et
la section d'affichage d'assistance (230) est configurée pour établir une notification que le moteur (10) est assisté au moyen de la lampe qui est allumé et/ou clignotante.

7. Dispositif d'affichage d'assistance selon l'une quelconque des revendications 1 à 6, **caractérisé en ce que** la période de temps prédéterminée est de 3 secondes ou moins, de préférence la période de temps prédéterminée est de 0,5 seconde ou plus et de moins de 2 secondes.

8. Dispositif compteur de vitesse destiné à être utilisé dans un véhicule à enfourcher (100, 102) ayant un moteur (10) et une machine électrique rotative (30) dans lequel une puissance du moteur (10) est assistée en utilisant une puissance de la machine électrique rotative (30), le dispositif compteur de vitesse comprenant une section d'affichage de vitesse (220) configurée pour afficher une vitesse de déplacement du véhicule à enfourcher (100, 102) et un dispositif d'affichage d'assistance selon l'une quelconque des revendications 1 à 7, dans lequel une surface de la section d'affichage d'assistance (230) est plus petite qu'une surface de la section d'affichage de vitesse (220).

9. Véhicule à enfourcher (100, 102) comprenant :
un cadre (101) comprenant un tube de tête (9) ;
un dispositif de direction (4) supporté sur le tube de tête (9) ;
un siège (5) agencé à l'arrière du dispositif de direction (4) ;
un espace pour jambes (8) agencé entre le dispositif de direction (4) et le siège (5), et utilisé par un motocycliste pour reposer dessus les pieds du motocycliste ;
un moteur (10) ;
une machine électrique rotative (30) configurée pour assister au moins une puissance du moteur (10) ;
et
un dispositif d'affichage d'assistance (260) selon l'une quelconque des revendications 1 à 7 ou un dispositif compteur de vitesse selon la revendication 8.

10. Procédé d'affichage d'assistance destiné à être utilisé dans un véhicule à enfourcher (100, 102) ayant un moteur (10) et une machine électrique rotative (30), dans lequel une puissance du moteur (10) est assistée en utilisant une puissance de la machine électrique rotative (30), le procédé d'affichage d'assistance comprenant les étapes consistant à :
établir une notification que le moteur (10) est assisté ; et
commander la notification par une section d'affichage d'assistance (230),
amener la section d'affichage d'assistance (230) à établir la notification sur une période de temps au cours de laquelle le moteur (10) est assisté, **caractérisé par** l'étape consistant à
amener la section d'affichage d'assistance (230) à, même après une fin de l'assistance, continuer à établir la notification sur une période de temps prédéterminée après la fin de l'assistance.

11. Procédé d'affichage d'assistance selon la revendication 10, **caractérisé en ce que** l'assistance est démarrée lorsqu'une condition de démarrage d'assistance prédéterminée est satisfaite ; et
lorsque le moteur est assisté, par la réception d'un signal d'état d'assistance à un premier niveau et, en réponse à la réception du signal d'état d'assistance au premier niveau, la section d'affichage d'assistance (230) est amenée à établir la notification.

12. Procédé d'affichage d'assistance selon la revendication 11, **caractérisé en ce que** l'assistance est terminée lorsqu'une condition de fin d'assistance prédéterminée est satisfaite ; et
lorsque l'assistance est terminée, par la réception d'un signal d'état d'assistance à un second niveau qui est différent du premier niveau et, en réponse à la réception du signal d'état d'assistance au second niveau, le décompte d'une période de temps prédéterminée est démarré.

13. Procédé d'affichage d'assistance selon l'une quelconque des revendications 10 à 12, **caractérisé en ce que** la période de temps prédéterminée est de 3 secondes ou moins.

14. Procédé d'affichage d'assistance selon la revendication 13, **caractérisé en ce que** la période de temps prédéterminée est de 0,5 seconde ou plus et de moins de 2 secondes.
